# EUROPEAN PATENT APPLICATION

(11) **EP 3 466 655 A1**
(43) Date of publication of application: **10.04.2019**
(21) Application number: 17792570.8
(22) Date of filing: 27.04.2017
(51) Int. Cl.: B29C 67/24, C04B 14/04, C04B 14/10, C04B 14/28, B22C 1/18, B22C 1/20, B22C 1/24, C04B 33/04, C04B 35/14, B28B 7/00

(54) **METHOD FOR PRODUCING INDUSTRIAL CLAY**

(30) Priority: 06.05.2016 CO 16119223
(71) Applicant: Universidad Eafit, Medellín 050022 (CO)
(72) Inventor: SIERRA ZULUAGA, Luis Fernando, Medellin 050022 (CO); ACOSTA MAYA, Diego Andrés, Medellín 050022 (CO); JARAMILLO VALLEJO, Julián, Medellín 050022 (CO); RESTREPO MONTOYA, Andrés, Medellín 050022 (CO); JARAMILLO RODRÍGUEZ, Alexander, Medellín 050022 (CO); CADAVID CÁRDENAS, José Luis, Medellín 050022 (CO)
(74) Representative: ABG Intellectual Property Law, S.L.
(86) International application number: PCT/IB2017/052443
(87) International publication number: WO 2017/191537

(57) **Abstract**

The invention describes a process for obtaining clay having improved characteristics that comprises incorporating an inorganic matrix onto an organic matrix at determined proportions. The industrial clay obtained is malleable and highly resistant to compression and strain, of great use in the industry of prototype elaboration.

## Description

### Field of the invention

The present invention belongs to the field of materials science, particularly to processes for obtaining industrial clay for prototyping.

### Description of Prior Art

Clay is a natural material formed by minerals. This malleable material is usually very moldable when combined with water. Its combination with water produces a substance having similar consistency to plastic, i.e., viscous and sticky. This ability to modify its structure allows for its use as a molding material in several applications.

Clay mixed with water acquires certain levels of plasticity that aids in molding. Upon drying, clay hardens and maintains the shape it was molded into. The most common way to dry clay is by applying heat in furnaces at temperatures in excess of 800° C.

Prior art describes various processes and compositions for obtaining malleable materials used in prototyping. US8633269 describes the process for obtaining a malleable, extruded and dry-resistant game composition that includes a polymeric ligand and a mineral oil. The composition can include a plasticizer, a releasing agent and one or more filler materials; among the fillers are talc, calcium carbonate, clays and combinations thereof.

US5244726 discloses a process for obtaining a geopolymeric material that includes disperse organic and inorganic phases, comprised of silicate, particulate material, surfactants, kaolin, volatile ash, and a pH-controlling buffer agent. During the manufacturing process, kaolin is used as a thickener and bentonite is used to absorb water. A product is obtained that self-hardens and is resistant to high temperatures.

Although prior art discloses several processes for obtaining malleable materials, the development of processes that allow obtaining materials for prototyping is necessary, such as the present invention that permits obtaining industrial clays having compression strength and strain properties, with lower associated productions costs and easily accessible raw materials.

### Brief description of the invention

The invention describes a process for obtaining industrial clay having improved characteristics that comprises incorporating an inorganic matrix onto an organic matrix at determined proportions. The clay obtained is malleable and resistant to compression and strain.

### Brief description of the drawings

FIG 1. Strength vs. percent strain graphic of composition 1 of Example 1.
FIG 2. Strength vs. percent strain graphic of composition 2 of Example 1.
FIG 3. Strength vs. percent strain graphic of composition 3 of Example 1.
FIG 4. Strength vs. percent strain graphic of composition 4 of Example 1.

### Detailed description of the invention

In order to obtain industrial clay for prototyping in accordance to the present invention, an organic matrix is initially prepared by mixing and heating its components. Then, an inorganic matrix is incorporated onto the organic matrix at a set proportion. Finally, mixing is carried out until obtaining clay in the form of a homogenous paste.

Initially, materials comprising the organic matrix are weighed (for example, wax, petroleum jelly, oil, mineral oil and combinations thereof) in a container that is heated and mixed controlling temperature for a period between 15 and 30 minutes. The dry materials (for example bentonite, filler materials) comprising the inorganic matrix are weighed. The inorganic matrix is slowly incorporated onto the previously heated organic matrix, in a set weight proportion of inorganic to organic matrix between 1:1 and 3:2, respectively. Finally, it is all stirred until a homogenous paste is obtained.

The organic matrix is obtained from mixing and heating components selected from the group consisting of wax, petroleum jelly, oil, microcrystalline wax, paraffin, lubricating oils, mineral oil, saturated hydrocarbons, and blends thereof. Likewise, the inorganic matrix is obtained from mixing components selected from the group consisting of bentonite, filler materials and blends thereof.

For purposes of the subject invention, the term "*filler materials"* corresponds to a composition comprising one or more of the following components: talc, carbonates, stearates, kaolin, complex carbohydrates, starch, cellulose, limestone, xanthan gum, carboxymethyl cellulose, and silica, all of which may form the inorganic matrix.

In a preferred embodiment of the process, the organic matrix is initially prepared mixing microcrystalline wax, mineral oil and petroleum jelly by stirring at 10 to 100 RPM and at a temperature between 80 and 150° C until obtaining one sole liquid phase at the bottom of the container. The organic matrix obtained is characterized by the composition indicated in Table 1.

**Table 1**

| **Component** | **% (w/w) dry base** |
|---|---|
| Microcrystalline wax | 90.0-100.0 |
| Petroleum jelly | 0.0-5.0 |
| Mineral oil | 0.0-5.0 |

The inorganic matrix is prepared by mixing in another container calcium bentonite and filler materials. The inorganic matrix obtained is characterized by the composition indicated in Table 2.

**Table 2**

| **Component** | **% (w/w) dry base** |
|---|---|
| Bentonite | 10.0-40.0 |
| Filler materials | 50.0-80.0 |

The inorganic matrix is then slowly incorporated onto the previously heated and mixed organic matrix, in a set weight proportion between 1:1 and 3:2. Finally, it is all stirred until industrial clay is obtained in the form of a homogenous paste.

The industrial clay obtained according to the process of the subject invention has the composition indicated in Table 3 and is characterized by the properties indicated in Table 4.

**Table 3**

| **Compound** | **% (w/w) dry base** |
|---|---|
| Calcium bentonite | 5.0 - 15.0 |
| Kaolin | 5.0 - 15.0 |
| Talc | 5.0 - 15.0 |
| Calcium stearate | 5.0 - 15.0 |
| Calcium carbonate | 5.0 - 15.0 |
| Microcrystalline wax | 20.0 - 30.0 |
| Mineral Oil | 5.0 - 10.0 |
| Petroleum jelly | 0.0 - 5.0 |

**Table 4**

| **Properties** | **Value** |
|---|---|
| Young Modulus (kPa) | 7500 - 12000 |
| Density (kg/m³) | 1.10 - 1.40 |
| Maximum compression strength (kPa) | 115.0 - 260.0 |
| Strain (%) | 2.25 - 4.00 |

The present invention will be depicted using the following examples, which are provided solely with the purpose of illustration and without intending to limit its scope.

### EXAMPLES

### Example 1: Preparation of industrial clay for prototyping

The organic matrix is prepared by mixing microcrystalline wax, mineral oil and petroleum jelly. It is then heated at a temperature of 60° C until forming an only liquid phase at the bottom of the container, under constant stirring of 20 RPM. The inorganic matrix is prepared by mixing calcium bentonite, kaolin, talc, calcium stearate and calcium carbonate, ground and screened using a Tyler 200 mesh.

The inorganic matrix is then slowly incorporated onto the heated organic matrix until a homogenous paste is formed under constant stirring at 20 RPM. The clay obtained is qualitatively assayed in order to determine if it adheres to the skin and it is characterized my measuring its mechanical properties such as compression strength, strain, Young modulus and density.

Example clay compositions of the subject invention were prepared in accordance to Table 5 wherein the relative amounts of the components used are listed. The mechanical characteristics obtained for the example compositions prepared according to Table 5 are listed in Table 6.

**Table 5.**

| COMPONENT | COMPOSITION (%w/w) | | | |
|---|---|---|---|---|
| | 1 | 2 | 3 | 4 |
| Microcrystalline wax (g) | 30,00 | 30,00 | 30,00 | 36,00 |
| Mineral oil (g) | 0,00 | 10,00 | 5,00 | 2,00 |
| Petroleum jelly (g) | 10,00 | 0,00 | 5,00 | 2,00 |
| Bentonite (g) | 12,00 | 12,00 | 12,00 | 12,00 |
| Kaolin (g) | 12,00 | 12,00 | 12,00 | 12,00 |
| Talc (g) | 12,00 | 12,00 | 12,00 | 12,00 |
| Calcium stearate (g) | 12,00 | 12,00 | 12,00 | 12,00 |
| Calcium carbonate (g) | 12,00 | 12,00 | 12,00 | 12,00 |

**Table 6.**

| CHARACTERISTICS | COMPOSITION | | | |
|---|---|---|---|---|
| | 1 | 2 | 3 | 4 |
| Young modulus (kPa) | 7883.00 | 2531.00 | 6520.00 | 11866.00 |
| Density (kg/m³) | 1.33 | 1.33 | 1.22 | 1.22 |
| Maximum compression strength (kPa) | 127.47 | 84.17 | 114.11 | 248.07 |
| Strain (%) | 2.50 | 3.60 | 2.80 | 3.00 |

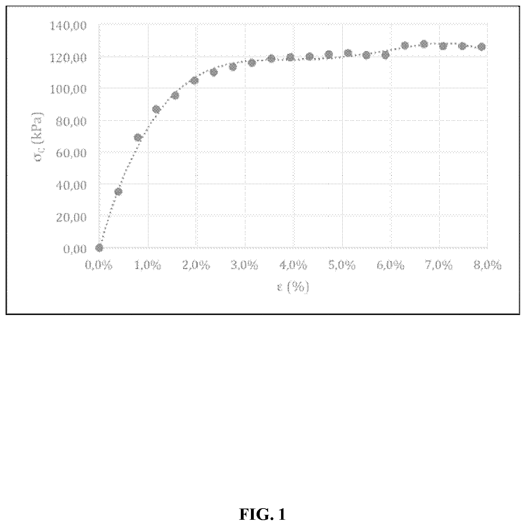

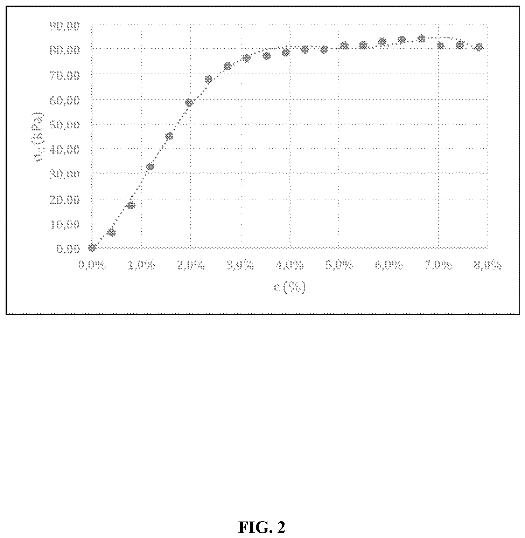

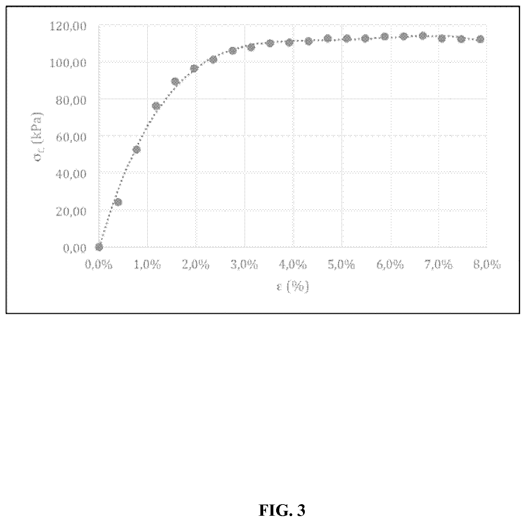

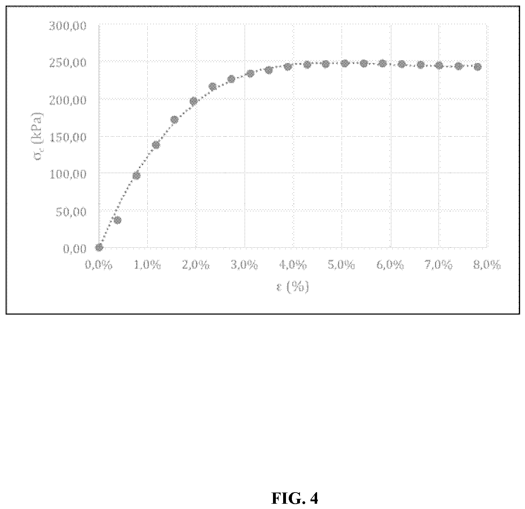

The above compositions show, among other things, that the clay of the subject invention has improved compression strength and strain characteristics as illustrated in FIGs 1, 2, 3 and 4. It may be noted that the Young modulus, compression strength and strain properties can be adjusted by changing ingredient proportions as shown in Table 5. Therefore, the range of these properties can vary from 2500 kPa to 12000 kPa for Young modulus, from 85 kPa to 250 kPa for compression strength, and from 2.5% to 3.5% for strain. Therefore, the subject invention is well adapted in order to carry out the objectives set out and achieving the mentioned purposes and advantages as well as all those that are inherent thereof.

## Claims

1. A process for obtaining industrial clay comprising the following steps:
a) preparing an organic matrix by mixing and heating components consisting of wax, petroleum jelly, oil, microcrystalline wax, paraffin, lubricating oils, mineral oil, saturated hydrocarbons and/or blends thereof;
b) incorporating, in a weight ratio of inorganic matrix to organic matrix ranging between 1:1 and 3:2, an inorganic matrix comprising bentonite and filler materials and/or blends thereof onto the organic matrix obtained in a), until an industrial clay is obtained in the form of a homogenous paste.

2. The process of Claim 1, wherein the organic matrix for step a) has the following composition:
| **Component** | **% (w/w) dry base** |
|---|---|
| Wax | 90.0-100.0 |
| Petroleum jelly | 0.0-5.0 |
| Oil | 0.0-5.0 |

3. The process of Claim 1, wherein the inorganic matrix for step b) has the following composition:
| **Component** | **% (w/w) dry base** |
|---|---|
| Bentonite | 10.0-40.0 |
| Filler materials | 50.0-80.0 |

4. The process of Claim 1, wherein in step a), the organic matrix is mixed under the following conditions: stirring at 10 to 100 RPM and at a temperature between 80 and 150° C.

5. Industrial clay obtained according to the process of Claim 1, comprising the following composition:
| **Compound** | **(%w/w) dry base** |
|---|---|
| Bentonite | 5.0 - 15.0 |
| Kaolin | 5.0 - 15.0 |
| Talc | 5.0 - 15.0 |
| Calcium stearate | 5.0 - 15.0 |
| Calcium carbonate | 5.0 - 15.0 |
| Microcrystalline wax | 20.0 - 30.0 |
| Mineral oil | 5.0 - 10.0 |
| Petroleum jelly | 0.0 - 5.0 |

6. The industrial clay according to Claim 5, having the following characteristics:
| **Characteristics** | **Value** |
|---|---|
| Young Modulus (kPa) | 7500 - 12000 |
| Density (kg/m³) | 1.10 - 1.40 |
| Maximum compression strength (kPa) | 80.0 - 260.0 |
| Strain (%) | 2.25 - 4.00 |
